# EUROPÄISCHE PATENTSCHRIFT

(11) **EP 0 527 386 B1**
(45) Veröffentlichungstag und Bekanntmachung des Hinweises auf die Patenterteilung: **28.06.1995**
(21) Anmeldenummer: 92112848.4
(22) Anmeldetag: 28.07.1992
(51) Int. Cl.: C08F 6/20, C08C 1/075, B01D 61/58

(54) **Verfahren zur Aufkonzentrierung von Latex-Dispersionen**
Process for concentrating latex dispersions
Procédés pour concentrer des dispersions de latex

(30) Priorität: 10.08.1991 DE 4126483
(43) Veröffentlichungstag der Anmeldung: 17.02.1993
(73) Patentinhaber: BAYER AG, 51368 Leverkusen (DE)
(72) Erfinder: Bachem, Henning, Dr., ZA-4490 Natal (ZA); Borkowsky, Anno, Dr., W-5030 Hürth (DE); Grave, Heinrich, Dr., W-5060 Bergisch Gladbach (DE); Tegtmeyer, Dietrich, Dr., W-5000 Köln 80 (DE); von der Linden, Bernd, Dr., W-5090 Leverkusen 1 (DE)

(56) Entgegenhaltungen:
- US-A- 4 160 726

## Beschreibung

Die vorliegende Erfindung betrifft ein Verfahren zur Aufkonzentrierung von Latex-Dispersionen mittels zweistufiger Querstromfiltration.

Es ist bekannt (siehe z.B. (1) K. Gäfgen; Chem. Ind., 3 (1977), (2) Abcor, Process Bulletin, PIB 249 (1975), (3) Abcor, Process Bulletin, PIB 250 (1976), (4) J. Zahka und L. Mir; Chem. Eng. Progress 12, 53 (1977), (5) J.J.S. Shen und L. Mir; Ind. Eng. Prod. Res. Dev., 21(1), 63 (1982) (6) US-A-41 60 726), latexhaltige Emulsionen bzw. latexhaltige Abwässer mittels Ultrafiltration aufzuarbeiten. Nachteilig bei den bestehenden Verfahren ist, daß Emulgatoren, die zur Stabilisierung des Latex dienen und in den aufzuarbeitenden Emulsionen vorhanden sind, abgetrennt werden, was zu Stabilitätsverlusten bei den aufgearbeiteten und aufkonzentrierten Latex-Emulsionen führt und mit einer Belastung der Abwässer an organischen Stoffen und anorganischen Salzen einhergeht.

Es wurde nun ein Verfahren zur Aufkonzentrierung von Latex-Dispersionen gefunden, das dadurch gekennzeichnet ist, daß man in einer zweistufigen Querstromfiltration zunächst die Latex-Dispersion bei Drücken von 2 bis 7 bar und Temperaturen von 20 bis 70°C bei turbulenter Strömung aufkonzentriert, das dabei anfallende Permeat mit dem darin befindlichen Emulgator anschließend bei 10 bis 40 bar und Temperaturen von 20 bis 50°C ebenfalls aufkonzentriert und das erhaltene Konzentrat mit dem Emulgator wieder in die erste Stufe der Querstromfiltration zurückführt. Das Permeat der zweiten Stufe ist in der Regel so sauber, daß es als Brauchwasser wieder in den Herstellprozeß zurückgeführt werden kann.

Die Querstromfiltration beider Stufen entspricht der typischen Druckpermeations-Anordnung wie sie z.B. in K. Marquardt, Abfallwirtschaft Journal 2 (1990, Nr. 4 beschrieben ist.

Die erfindungsgemäß durchgeführte Querstromfiltration wird in der ersten Stufe bevorzugt bei Temperaturen von 35 bis 45°C und bei Drücken von 4 bis 5 bar durchgeführt.

Die Querstromfiltration der zweiten Stufe wird bevorzugt bei Drücken von 14 bis 16 bar und Temperaturen von 30 bis 40°C durchgeführt.

Bei dem erfindungsgemäßen Verfahren wird die Querstromfiltration der ersten Stufe vorzugsweise mittels Ultrafiltration oder Mikrofiltration durchgeführt. Die bei der Ultrafiltration eingesetzten feinporigen Membranen weisen Trenngrenzen von 1000 bis 150 000 Dalton, bevorzugt 50 000 bis 100 000 Dalton auf.

Die bei der Mikrofiltration verwendeten Membranen weisen eine Porengröße von 0,01 bis 0,5, bevorzugt 0,2 bis 0,1 »m, auf.

Die Querstromfiltration der zweiten Stufe des erfindungsgemäßen Verfahrens wird in Form einer Umkehrosmose (Reversosmose) durchgeführt oder in Form einer Nanofiltration. Bei der Reversosmose werden Membranen eingesetzt die Trenngrenzen < 300 Dalton aufweisen, bevorzugt < 150 Dalton.

Wird die Nanofiltration in der zweiten Stufe durchgeführt so werden Membranen verwendet, die eine Trenngrenze im Bereich von 150 bis 1 000 Dalton, bevorzugt 300 bis 500 Dalton aufweisen.

Die erfindungsgemäße zweistufige Querstromfiltration wird in Membrananlagen durchgeführt, in denen die Membranen zu verschiedenen Modulen zusammengefaßt sind. Beispielsweise können Anlagen mit Tubular- oder Röhrenmodulen, Kapillarmodulen, Wickelmodulen oder Rohrscheibenmodulen eingesetzt werden.

Als Membranwerkstoff kommen eine Vielzahl von Materialien in Betracht. Entweder werden sie aus organischen Materialien oder aus anorganischen Materialien hergestellt. Zur Theorie und zur Anwendung von Membranprozessen und zur Erläuterung der Modulkonstruktion und Membranmaterialien wird u.a. auf H. Strathmann; Chemie-Technik 7, 33(1978), W. Pusch und A. Walch; Angew. Chem. 94, 670(1982), K. Marquardt, Abfallwirtschaft Journal 2(1990), Nr. 4, Seite 177ff. oder R. Rautenbach und A. Rüschl; Technische Mitteilungen, 82. Jahrgang, Heft 6, November/Dezember 1989, Seite 400ff verwiesen.

Für die Querstromfiltration der ersten Stufe kommen beispielsweise als organische Membranmaterialien in Frage Polyvinylidenfluorid, Celluloseacetat, Polytetrafluorethylen, Polyacrylnitril, Polyethylenimin, Copolymerisate aus Polyacrylnitril und Vinylpyrrolidon, Polysulfon, Polyamid, Polyhydantoin oder auch hydrophylierte Polyolefine, z.B. auf Basis von Polypropylen. Chemisch modifizierte Polyacrylnitrilmembranen (siehe z.B. EP-A-25 973), die z.B. erhalten werden durch Umsetzung des Basispolymers mit Hydroxylamin, einer polyfunktionellen niedermolekularen Verbindung, einem Reaktivgruppen enthaltenden Polymer und einer ionischen Verbindung, die mit dem Polymer eine chemische Bindung eingehen kann, und anschließend mit Aktivchlor, z.B. einer Hypochloritlösung, behandelt werden, sind als Membranen für die Querstromfiltration in der ersten Stufe ebenfalls geeignet.

Anorganische Membranen sind z.B. solche aus porösem Metall oder Metall-Legierungen (sog. Metallsintermembranen, z.B. aus porösem Stahl) oder solche aus porösem Kunststoff, dessen Oberfläche, z.B. mit einer dünnen Schicht aus Zirkonoxid, Silicium- oder Aluminiumoxid belegt sein kann oder aus porösem Glas oder Keramik.

Bevorzugt zum Einsatz bei der Ultrafiltration gelangen beispielsweise die folgenden Membranen (die eingeklammerten Zahlen geben den Trennschnitt oder cut-off an): Polyacrylnitrilmembran (ca. 100 000 Dalton), Celluloseacetatmembran (ca. 5 000 bis 20 000 Dalton), Polysulfonmembran (ca. 10 000 Dalton), Zirkonoxidmembran (ca. 20 000 bis 100 000 Dalton).

Beim Einsatz der Mikrofiltration in der ersten Stufe, kommen bevorzugt folgende Membranen (die eingeklammerten Zahlen geben die Porengrößen an) zum Einsatz: PTFE (ca. 0,02-0,5 »m), Polypropylen (ca. 0,02-0,5 »m) und Zirkonoxid (0,1-0,5 »m).

Die Querstromfiltration in der ersten Stufe wird wie erwähnt unter Druck betrieben. Dabei kann es von Vorteil sein, auf seiten des Latex unter Druck zu arbeiten und permeatseitig gleichzeitig ein Vakuum anzulegen.

Besonders bevorzugt wird bei der Querstromfiltration in der ersten Stufe eine chemisch beständige Zirkonoxidmembran mit einem Trennschnitt von ca. 50 000 Dalton eingesetzt.

Für die zweite Stufe der erfindungsgemäßen Querstromfiltration werden semipermeable Membranen eingesetzt, die einen Trennschnitt im Molekulargewichtsbereich von < 1 000 Dalton aufweisen. Derartige Membranen lassen Wasser und aufgelöste Stoffe, die aufgrund ihres Molekulargewichts unterhalb der Trenngrenze liegen, bei geringem bis mittleren Druck durchtreten.

Die in der zweiten Stufe für die Querstromfiltration eingesetzten Membranen bestehen aus einem polymeren, organischen Material, das vorwiegend an der Oberfläche durch saure oder basische Gruppen modifiziert worden ist.

Bei dem polymeren Membranmaterial handelt es sich um natürliche, halbsynthetische oder synthetische Materialien, die als reaktionsfähige Gruppen beispielsweise Hydroxy-, Amino- oder Amidoximgruppen enthalten. Derartige Materialien können mit geeigneten Reagenzien umgesetzt werden, die einerseits saure oder basische Gruppen und andererseits mindestens eine unter Bildung einer chemischen (kovalenten) Bindung reaktionsfähige Gruppen enthalten.

Bei den sauren Gruppen handelt es sich in erster Linie um Carboxyl- oder Sulfongruppen und bei den basischen Gruppen um primäre, sekundäre oder tertiäre Aminogruppen, ferner Phosphonium- oder Sulfoniumgruppen.

Als reaktive Agenzien, die eine saure oder basische Gruppe enthalten, und mit den Basispolymeren umgesetzt werden können, kommen beispielsweise farblose oder farbige Verbindungen in Betracht, vor allem saure Reaktivfarbstoffe, die verschiedenen Klassen angehören können, wie Anthrachinon-, Azo- und Formazanfarbstoffe. Sie können gegebenenfalls auch als Metallkomplexe vorliegen.

Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten. Derartige Membranen sind z.B. in DE-A-25 05 254, EP-A-25 973, EP-A-26 399 und EP-A-47 953 beschrieben.

Weitere geeignete Membranen für die zweite Stufe der Querstromfiltration sind z.B. solche auf Basis von gegebenenfalls modifizierten Polysulfonen (vgl. EP-A-61 424), Polyamide oder Polystyrol (siehe z.B. EP-A-82 355).

Insbesondere verwendet man jedoch anionisch modifizierte Polyacrylnitril-, Polysulfon- oder Celluloseacetat-Membranen.

Das erfindungsgemäße Verfahren eignet sich insbesondere für die Aufarbeitung von PVC-, SBR-, Acrylat-, CR-, Polyvinylacetat- und Naturlatex-Dispersionen, sowie von Dispersionen aus Polybutadien-, Acrylnitril-, Butadien-Latices sowie deren Gemische.

Nach dem erfindungsgemäßen Verfahren können Latex-Dispersionen aufkonzentriert werden, die den Latex in einer Konzentration von 0,01 bis 50 Gew.-%, bevorzugt 0,1 bis 40 Gew.-%, enthalten.

Besonders geeignet ist das erfindungsgemäße Verfahren zur Aufkonzentrierung von latexhaltigen Abwässern, die den Latex in einer Konzentration von etwa 0,1 bis 5 Gew.-% enthalten. Dabei kann die Aufkonzentrierung des latexhaltigen Abwassers so geführt werden, daß der Latex-Gehalt im Konzentrat der ersten Stufe etwa 10 bis 40 Gew.-% beträgt. Geht man von höheren Latex-Konzentrationen aus (beispielsweise über 30 Gew.-%), so ist es nach dem erfindungsgemäßen Verfahren möglich, die Latex-Dispersion so aufzukonzentrieren, daß Dispersionen erhalten werden, die einen Latex-Gehalt von 50 Gew.-% und mehr besitzen.

Wird nach dem erfindungsgemäßen Verfahren latexhaltiges Abwasser aufkonzentriert, so ist es vorteilhaft, wenn man das in der ersten Stufe anfallende Konzentrat dem vorgeschalteten Latex-Herstellungsprozeß wieder zuführt.

Das bei der Aufkonzentrierung in der ersten Stufe anfallende Permeat, das neben den bei der Latex-Herstellung verwendeten Emulgatoren noch die verschiedensten Salze, wie Natriumchlorid, Natriumsulfat enthält, wird, nachdem es ebenfalls aufkonzentriert wurde (auf Emulgatorkonzentrationen von 0,05 bis 1, bevorzugt von 0,05 bis 0,8 Gew.-%, und Salzkonzentrationen von 0,1 bis 1,5 Gew.-%, bevorzugt 0,15 bis 1,0 Gew.-%) in die erste Stufe der Querstromfiltration zurückgeführt.

Das bei der zweiten Stufe der Querstromfiltration erhaltene Permeat, das praktisch frei von organischer Fracht und Salzfracht ist, kann in den Latex-Polymerisationsprozeß als Einsatzwasser wieder verwendet werden.

Für das erfindungsgemäße Verfahren kann von Vorteil sein, wenn man kontinuierlich eine geringe Menge (0,001 bis 1,0 %, bezogen auf die Gesamtmenge latexhaltigem Abwasser) an frischer Emulgatorlösung zur weiteren Stabilisierung des aufzukonzentrierenden Latex in die erste Stufe der Querstromfiltration zugibt. Als Emulgatoren können die bei der Latex-Polymerisation üblichen und bekannten Emulgatoren eingesetzt werden, wie Natriumlaurylsulfat, Arylalkylsulfonate und/oder Polyglykolether.

Die erfindungsgemäße Aufkonzentrierung von Latex-Dispersionen kann sowohl in kontinuierlicher als auch in diskontinuierlicher Fahrweise betrieben werden.

Die Vorteile des erfindungsgemäßen Aufkonzentrierungsverfahrens liegen darin, daß keine nennenswerten Verluste am Emulgator bei der Latexaufkonzentrierung entstehen, dieser im Kreis gefahren wird und das Permeat der zweiten Stufe als Einsatzwasser wieder zur Verfügung steht und nicht in das Abwasser gelangt.

Es muß als überraschend angesehen werden, daß bei der erfindungsgemäßen Aufkonzentrierung der Latex-Dispersionen in der ersten Stufe der Querstromfiltration die Latex-Dispersion stabil bleibt und nicht, wie zu erwarten war, aufgrund insbesondere des Salzanteils des in die erste Stufe zurückgeführten Permeats eine Koagulation des Latex stattfindet. Die Stabilität der durch Ultrafiltration zu behandelnden Latex-Emulsionen stellt in der Technik ein großes Problem dar, und dies wurde bislang, wie die eingangs zitierte Literatur belegt, nur durch die Zugabe von zusätzlichen Emulgatoren gelöst.

Die folgenden Beispiele dienen zur Erläuterung des erfindungsgemäßen Verfahrens. Der Membranflux ist angegeben in Liter Permeat pro m² Membranfläche und Tag (1/m² x d).

### Beispiel 1

5 m³ SBR-Latex-Abwasser mit der Zusammensetzung:
0,61 % SBR-Latex
0,05 % anionischer Emulgator (Alkylsulfonat (C₁₂-C₂₀-Schnitt)
0,12 % Salze
99,22 % Wasser
und einem pH-Wert von 7,5 wurden einer Ultrafiltration unterworfen. Man verwendete hierzu eine Zirkonoxidmembran (Zirkonoxid auf Aluminiumoxidträgermembran mit einem molekularen Trennschnitt von 50 000. Durchgeführt wurde die Ultrafiltration bei einem Druck von 4,4 bar und einem Membranflux von 10 340 l/m² x d. Die Temperatur betrug im Mittel 38°C. Alle 4 Stunden wurde 1 l anionischer Emulgator (Mersolat® K30 der Fa. Bayer AG) zugesetzt und alle 24 Stunden 5 l Bakterizid (Preventol® D7 der Fa. Bayer AG).

Alle 8 Stunden wurde neues Abwasser obiger Zusammensetzung zugeführt Nach 80 Stunden Laufzeit wurde nichts mehr zugeführt, sondern aufkonzentriert .

Man erhielt einen 38,5 %igen Latex mit einem pH-Wert von 6,7.

Gleichzeitig mit der Ultrafiltration wurde die Reversosmose gestartet. Das Permeat der Ultrafiltration wurde hier nach einmaligem Durchgang durch die Membran konzentriert in die Vorlage der Ultrafiltration zurückgeführt. Als Membran verwendete man ein Polysulfonmembran mit einem Trennschnitt < 300 Dalton in Form eines Wickelmoduls. Betrieben wurde die Reversosmose bei 15,9 bar und einem Membranflux von 500 l/m² x d. Die mittlere Temperatur lag bei 38°C.

Das Permeat der Reversosmose mit einem Gehalt an organisch gebundenem Kohlenstoff (TOC) von 4 mg/l und einem Gehalt an anorganisch gebundenem Kohlenstoff (TAC) von 9 mg/l wurde gesammelt und in den Latex-Herstellungsprozeß zurückgeführt

### Beispiel 2

5 m³ SBR-, Acrylnitril-Butadien-, Acrylat-Latex mit Abwasser mit der Zusammensetzung:
1,67 % Latex-Gemisch obiger Zusammensetzung
0,08 % anionischer Emulgator (Alkylsulfonat (C₁₂-C₂₀)
0,21 % Salze
98,04 % Wasser
und einem pH-Wert von 7,6 wurden einer Ultrafiltration unterworfen. Man verwendete hierzu eine Polysulfonmembran mit einem molekularen Trennschnitt von 60 000. Durchgeführt wurde die Ultrafiltration bei einem Druck von 4,8 bar, einem Membranflux von 3 890 l/m² x d. Die Temperatur betrug im Mittel 35°C. Alle 4 Stunden wurde 1 l anionischer Emulgator, (Mersolat® K30) zugesetzt und alle 24 Stunden 5 l Bakterizid (Preventol® D7).

Alle 20 Stunden wurde neues Abwasser obiger Zusammensetzung zugeführt. Nach 120 Stunden Laufzeit wurde nichts mehr zugeführt, sondern aufkonzentriert.

Man erhielt einen 32,4 %igen Latex mit einem pH-Wert von 6,9.

Gleichzeitig mit der Ultrafiltration wurde die Reversosmose gestartet. Das Permeat der Ultrafiltration wurde hier nach einmaligem Durchgang durch die Membran konzentriert in die Vorlage der Ultrafiltration zurückgeführt. Als Membran verwendete man eine organische Wickelmodulmembran (siehe Beispiel 1) mit einem Trennschnitt < 300 Dalton. Betrieben wurde die Reversosmose bei 15,9 bar und einem Membranflux von 500 l/m² x d. Die mittlere Temperatur lag bei 38°C.

Das Permeat der Reversosmose mit einem TOC-Gehalt von 5 mg/l und einem TAC-Gehalt von 11 mg/l wurde gesammelt und in den Latex-Herstellungsprozeß zurückgeführt.

## Patentansprüche

1. Verfahren zur Aufkonzentrierung von Latex-Dispersionen, dadurch gekennzeichnet, daß man in einer zweistufigen Querstromfiltration zunächst die Latex-Dispersion bei Drücken von 2 bis 7 bar und Temperaturen von 20 bis 70°C bei turbulenter Strömung aufkonzentriert, das dabei anfallende Permeat mit dem darin befindlichen Emulgator anschließend bei 10 bis 40 bar und Temperaturen von 20 bis 50°C ebenfalls aufkonzentriert und das erhaltene Konzentrat mit dem Emulgator wieder in die erste Stufe der Querstromfiltration zurückführt.

2. Verfahren nach Anspruch 1, dadurch gekennzeichnet, daß man in der ersten Stufe eine Ultrafiltration durchführt, wobei Membranen verwendet werden, die Trenngrenzen von 1 000 bis 150 000 Dalton besitzen.

3. Verfahren nach Anspruch 1, dadurch gekennzeichnet, daß man in der ersten Stufe eine Mikrofiltration durchführt: wobei Membranen verwendet werden, die Porengrößen von 0,01 bis 0,5 »m besitzen.

4. Verfahren nach Ansprüchen 1 bis 3, dadurch gekennzeichnet, daß man in der zweiten Stufe eine Umkehrosmose durchführt, wobei Membranen verwendet werden, die Trenngrößen von < 150 Dalton besitzen.

5. Verfahren nach Ansprüchen 1 bis 3, dadurch gekennzeichnet, daß man in der zweiten Stufe eine Nanofiltration durchführt, wobei Membranen verwendet werden, die Trenngrößen von 150 bis 1 000 Dalton aufweisen.

6. Verfahren nach Ansprüchen 1 bis 5, dadurch gekennzeichnet, daß man Latex-Dispersionen aufkonzentriert, deren Latex-Anteil in der Dispersion 0,01 bis 50 Gew.-% beträgt.

7. Verfahren nach Anspruch 1, dadurch gekennzeichnet, daß man bei der Aufkonzentrierung von latexhaltigen Abwässern mit Latex-Konzentrationen von 0,1 bis 5 Gew.-% das in der ersten Stufe anfallende Konzentrat in den Latex-Herstellungsprozeß zurückführt.

## Claims

1. Process for concentrating latex dispersions, characterised in that, in a two-stage cross-flow filtration, the latex dispersion is first concentrated at pressures of 2 to 7 bar and temperatures of 20 to 70°C under turbulent flow conditions, the resultant permeate, together with the emulsifier present therein, is then also concentrated at 10 to 40 bar and temperatures of 20 to 50°C and the concentrate obtained is returned with the emulsifier to the first stage of the cross-flow filtration.

2. Process according to claim 1, characterised in that an ultrafiltration is performed in the first stage, wherein membranes are used which have cut-off limits of 1,000 to 150,000 dalton.

3. Process according to claim 1, characterised in that a microfiltration is performed in the first stage, wherein membranes are used which have pore sizes of 0.01 to 0.5 »m.

4. Process according to claims 1 to 3, characterised in that a reverse osmosis is performed in the second stage, wherein membranes are used which have cut-off sizes of < 150 dalton.

5. Process according to claims 1 to 3, characterised in that a nanofiltration is performed in the second stages, wherein membranes are used which have cut-off sizes of 150 to 1,000 dalton.

6. Process according to claims 1 to 5, characterised in that latex dispersions are concentrated which have a latex content in the dispersion of 0.01 to 50 wt.%.

7. Process according to claim 1, characterised in that, when concentrating effluents containing latex with latex concentrations of 0.1 to 5 wt.%, the concentrate arising in the first stage is returned to the latex production process.

## Revendications

1. Procédé de concentration de dispersions de latex, caractérisé en ce qu'on concentre d'abord la dispersion de latex à des pressions de 2 à 7 bar et des températures de 20 à 70°C en courant turbulent, par filtration à courant transversal à deux étapes, qu'on concentre ensuite également le perméat ainsi obtenu avec l'émulsifiant qu'il contient à 10 à 40 bar et à des températures de 20 à 50°C et qu'on recycle le concentré obtenu avec l'émulsifiant dans la première étape de filtration à courant transversal.

2. Procédé selon la revendication 1, caractérisé en ce qu'on procède à une ultrafiltration au cours de la première étape, en utilisant des membranes qui possèdent des seuils de coupure de 1 000 à 150 000 d.

3. Procédé selon la revendication 1, caractérisé en ce qu'on procède à une microfiltration au cours de la première étape en utilisant des membranes qui possèdent une grosseur de pore de 0,01 à 0,5 »m.

4. Procédé selon les revendications 1 à 3, caractérisé en ce qu'on procède à une osmose inverse au cours de la seconde étape, en utilisant des membranes qui possèdent des seuils de coupure < 150 d.

5. Procédé selon les revendications 1 à 3, caractérisé en ce qu'on procède à une nanofiltration au cours de la seconde étape, en utilisant des membranes qui présentent des seuils de coupure de 150 à 1 000 d.

6. Procédé selon les revendications 1 à 5, caractérisé en ce qu'on concentre des dispersions de latex dont la proportion de latex dans la dispersion est comprise entre 0,01 et 50 % en poids.

7. Procédé selon la revendication 1, caractérisé en ce qu'on recycle le concentré obtenu au cours de la première étape dans le procédé de fabrication de latex lors du traitement d'eaux usées laticifères ayant des concentrations en latex de 0,1 à 5% en poids.
